# EUROPÄISCHE PATENTANMELDUNG

(11) **EP 4 468 648 A1**
(43) Veröffentlichungstag der Anmeldung: **27.11.2024**
(21) Anmeldenummer: 23175106.6
(22) Anmeldetag: 24.05.2023
(51) Int. Cl.: H04L 9/00, G06F 21/64

(54) **BLOCKCHAIN-DATENSTRUKTUR FÜR EIN SIMULATIONSMODELL**

(71) Anmelder: Siemens Aktiengesellschaft, 80333 München (DE)
(72) Erfinder: Röhrl, Manuel, 81673 München (DE)
(74) Vertreter: Siemens Patent Attorneys

(57) **Zusammenfassung**

Die Erfindung betrifft Blockchain-Datenstruktur (10) für ein Simulationsmodell, wobei das Simulationsmodell (20) in einer zentralen Speichereinheit und getrennt von der Blockchain-Datenstruktur (10) gespeichert ist umfassend:
a. mindestens ein eindeutiges Identifizierungskennzeichen (12); wobei b. das eindeutige Identifizierungskennzeichen (12) eine Verknüpfung zu dem Simulationsmodell aufweist; wobei das eindeutige Identifizierungskennzeichen (12) einen Programmcode in Bezug auf das Simulationsmodell aufweist, welcher mindestens eine Bedingung und mindestens eine Anweisung umfasst; wobei die mindestens eine Bedingung eine Nutzung des Simulationsmodells festlegt; wobei der Programmcode ausgeführt wird, wenn die mindestens eine Bedingung erfüllt ist. Ferner betrifft die Erfindung eine zentrale Speichereinheit und ein entsprechendes technisches System.

## Beschreibung

Unabhängig vom grammatikalischen Geschlecht eines bestimmten Begriffes sind Personen mit männlicher, weiblicher oder anderer Geschlechteridentität mit umfasst.

### 1. Technisches Gebiet

Die Erfindung betrifft eine Blockchain-Datenstruktur für ein Simulationsmodell. Ferner ist die Erfindung auf eine entsprechende zentrale Speichereinheit und ein entsprechendes technisches System gerichtet.

### 2. Stand der Technik

Die Technologie von Blockketten (engl. Blockchains) bzw. "Distributed Ledgers" ist aktuell eine intensiv diskutierte Technologie. Neben Anwendungen für dezentrale Bezahlsysteme (z.B. Bitcoin) werden beispielsweise auch in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst i.A. Programmcode, der auch als sogenannter "Smart Contract" bezeichnet werden kann.

Bei Bitcoin wird eine relativ einfache stackbasierte Laufzeitumgebung verwendet. Eine Transaktion umfasst dabei die Prüfsumme zur Überprüfung der Gültigkeit der Transaktion. Die Blockchain-Plattform Ethereum unterstützt eine frei programmierbare Laufzeitumgebung, sodass der Programmcode einer Blockchain flexibel realisiert werden kann. Dabei wird z. B. eine Geschäftslogik als Programmcode in der Transaktion und damit in der Blockchain hinterlegt.

Die Blockchain-Technologie realisiert eine verteilte, dezentrale Datenbank, in der Transaktionen manipulationsgeschützt ablegbar sind. Dafür werden Transaktionen in einem Block hinterlegt. In einer solchen Blockchain-Datenstruktur ist neben einer oder mehreren Transaktionen ein Hashwert eines Vorgängerblockes hinterlegt. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Bei diesem Mining-Prozess wird die Gültigkeit von im Block zu hinterlegenden Transaktionen geprüft. Zusätzlich wird ein sogenanntes kryptographisches Puzzle gelöst, für welches die Mining-Knoten Rechenkapazität aufbringen müssen. Der Aufwand wird beispielsweise durch einen bestimmten Betrag in der Kryptowährung, auf der die Blockchain beruht, belohnt. Das Lösen des kryptographischen Puzzles wird auch als "Proof-of-Work-Nachweis" bezeichnet. Es wird die Lösung einer rechenintensiven Aufgabe nachgewiesen, welche abhängig vom Inhalt eines Blockes zu lösen ist. Die Kette der Blöcke ist bei einer Vielzahl von Blockchain Knoten gespeichert, es erfolgt eine Synchronisation der teilnehmenden Knoten. Die Information zu den Transaktionen ist also redundant im Netz hinterlegt.

Die vorliegende Erfindung stellt sich daher die Aufgabe eine Blockchain-Datenstruktur für ein Simulationsmodell bereitzustellen.

### 3. Zusammenfassung der Erfindung

Die oben genannte Aufgabe wird erfindungsgemäß durch eine Blockchain-Datenstruktur für ein Simulationsmodell gelöst; wobei das Simulationsmodell in einer zentralen Speichereinheit und getrennt von der Blockchain-Datenstruktur gespeichert ist, umfassend:
a. mindestens ein eindeutiges Identifizierungskennzeichen; wobei
b. das mindestens eine eindeutige Identifizierungskennzeichen eine Verknüpfung zu dem Simulationsmodell aufweist; wobei
   das eindeutige Identifizierungskennzeichen einen Programmcode in Bezug auf das Simulationsmodell aufweist, welcher mindestens eine Bedingung und mindestens eine Anweisung umfasst; wobei
   die mindestens eine Bedingung eine Nutzung des Simulationsmodells festlegt; wobei
   der Programmcode ausgeführt wird, wenn die mindestens eine Bedingung erfüllt ist.

Dementsprechend ist die Erfindung auf eine Blockchain-Datenstruktur gerichtet. Die Blockchain-Datenstruktur ist für ein Simulationsmodell geeignet. Das Simulationsmodell ist nicht in der Blockchain-Datenstruktur gespeichert, sondern separat von dieser Datenstruktur in einer anderen Speichereinheit.

Die Blockchain-Datenstruktur weist ein oder mehrere eindeutige Identifizierungskennzeichen auf. Das eindeutige Identifizierungskennzeichen kennzeichnet das Simulationsmodell. Hierfür weist das eindeutige Identifizierungskennzeichen eine Verknüpfung oder einen Link zum Simulationsmodell auf. Das Identifizierungskennzeichen in der Blockchain ist mit anderen Worten eine Art unfälschbare Besitzurkunde für das Simulationsmodell als digitales Objekt oder die digitale Entsprechung des Simulationsmodells.

Ferner weist das eindeutige Identifizierungskennzeichen auch Programmcode auf. Der Programmcode kann dabei auch als sogenannter "Smart Contract" (intelligenter Vertrag) bezeichnet werden. Der Programmcode weist eine oder mehrere Bedingungen und eine oder mehrere Anweisungen in Bezug auf das Simulationsmodell auf. Die Bedingung ist eine Nutzung des Simulationsmodells. Die Nutzung kann auch als Verwendung, Verwendungszweck oder Anwendung ausgelegt werden. Die Bedingung legt somit fest, wie das Simulationsmodell eingesetzt wird.

Der Programmcode mit der Anweisung wird beim Eintritt der einen oder mehreren Bedingungen automatisch auf der Blockchain-Datenstruktur ausgeführt. Bei Nutzung des Simulationsmodells wird folglich die Anweisung ausgeführt. Die Anweisung kann eine Vergütung, Nutzungsentgelt ("compensation for use"), ein finanzieller Ausgleich, eine Belohnung, oder eine Entschädigung sein, welche bei Nutzung des Simulationsmodells automatisch fällig wird bzw. getriggert wird. Dabei können flexibel unterschiedliche Zahlungsmöglichkeiten Anwendung finden, wie einmalige Zahlung oder abhängig von der Benutzung ("pay-by-use payment").

Somit ist der Gegenstand des Smart Contracts bzw. das zu schützende Gut das Simulationsmodell. Üblicherweise werden die Systemmodelle von Entwicklern entwickelt und umfassen Expertenwissen meist über mehrere Jahrzehnte. Die Vertragsparteien des Smart Contracts können folglich der Käufer bzw. der Anwender des Simulationsmodells und der Verkäufer bzw. der Entwickler (wie System engineer oder Firma) des Simulationsmodells sein, welche dem Anwender das Modell zur Verfügung stellen.

Mit anderen Worten werden den Simulationsmodellen Identifizierungskennzeichnen zugewiesen bzw. die Simulationsmodelle werden mit den Identifizierungskennzeichen kombiniert.

Die vorliegende Erfindung stellt dadurch sicher, dass es dem Verkäufer des Simulationsmodells ermöglicht wird das Simulationsmodell auf effiziente, zuverlässige und nachhaltige Art und Weise zu verkaufen.

Der wesentliche Vorteil hinsichtlich Kosten liegt in der erhöhten Effizienz das Nutzungsentgelt für das Simulationsmodell abzuwickeln. Dies wird durch die Smart Contracts realisiert, welche digital und automatisch ausgestaltet sind. Der Smart Contract wird unmittelbar ausgeführt, sobald die Bedingung erfüllt ist. Es ist keine manuelle Interaktion mehr erforderlich, wie ein Vermittler als dritte Partei, welcher die Transaktionen abwickelt. Nachteilig an der dritten Partei gemäß dem Stand der Technik ist, dass dieser Ansatz anfällig für Fehler, zeitliche Verzögerungen und zusätzliche Gebühren ist. Diese Nachteile werden durch die Smart Contracts überwunden. Durch den Wegfall der dritten Partei wird auch die Vertrauenswürdigkeit sowie Transparenz in Bezug auf das Simulationsmodell und den Smart Contract erheblich verbessert.

Die verschlüsselten Transaktionsprotokolle ("transaction logs") werden zwischen den Parteien geteilt. Im Gegensatz zum Stand der Technik können die Transaktionsprotokolle nicht manipuliert werden, da die Transaktionsprotokolle sicher sind sowie für einen Hacker schwierig zu hacken. Dadurch ist das Simulationsmodell bestmöglich geschützt.

Der Käufer kauft und besitzt das Simulationsmodell in einer nachvollziehbaren Weise. Gemäß dem Stand der Technik hingegen werden Lizenzen oder Copyrights verwendet.

In einer weiteren Ausgestaltung ist das eindeutige Identifizierungskennzeichen ein Token, bevorzugt ein non-fungible token, NFT. Dementsprechend kann das Identifizierungskennzeichen als jegliches Kennzeichen ausgebildet sein und kann flexibel in Abhängigkeit vom Smart Contract, Simulationsmodell, den Vertragsparteien oder anderen Bedingungen gewählt werden.

In einer weiteren Ausgestaltung ist die zentrale Speichereinheit, in der das Simulationsmodell gespeichert ist, ein Server. Dementsprechend kann die zentrale Speichereinheit als eine flüchtige oder nicht-flüchtige Speichereinheit ausgebildet sein, wie Datenbank oder Cloud. Die Speichereinheit ermöglicht eine zuverlässige und schnelle Datensicherung. Die Speichereinheit kann hinsichtlich ihrer Speicherkapazität sowie Skalierbarkeit etc. flexibel ausgewählt werden. Ein weiterer Vorteil liegt darin, dass auf die Daten effizient zugegriffen werden kann.

Ferner betrifft die Erfindung eine zentrale Speichereinheit aufweisend ein Simulationsmodell.

Ferner betrifft die Erfindung ein entsprechendes technisches System.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.

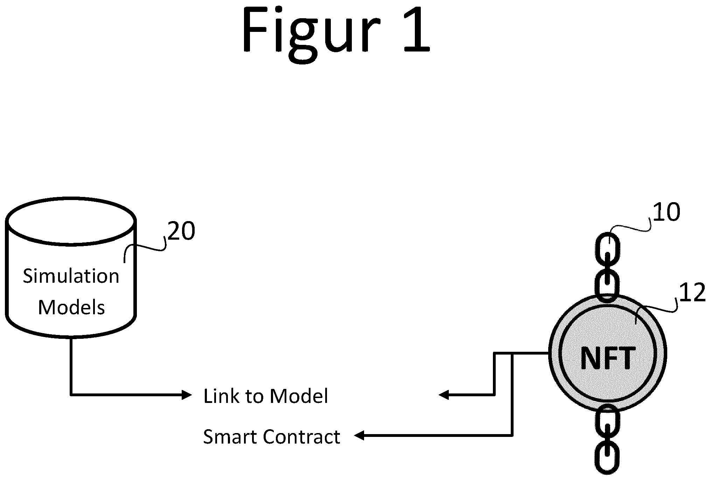

- FIG 1: zeigt eine schematische Ansicht des erfindungsgemäßen technischen Systems.

### 5. Beschreibung der bevorzugten Ausführungsformen

Im Folgenden werden bevorzugte Ausführungsformen der vorliegenden Erfindung in Bezug auf die Figuren beschrieben.

Figur 1 zeigt eine schematische Ansicht des erfindungsgemäßen technischen Systems. Die Simulationsmodelle 20 werden mit den Identifizierungskennzeichen 12 der Blockchain-Datenstruktur 10 verknüpft. Bevorzugt sind die Identifizierungskennzeichen 12 als NFT ausgebildet, wie in Figur 1 veranschaulicht. Das Simulationsmodell 20 ist nicht auf der Blockchain-Datenstruktur 10, in einer anderen Blockchain oder in einer anderen dezentralen Speichereinheit gespeichert. Sondern das Simulationsmodell 20 ist in einer zentralen Speichereinheit gespeichert, bevorzugt Server, wie "private Server". Lediglich die Verknüpfung oder der Link zum Simulationsmodell 20 wird im NFT 12 gespeichert.

Dadurch wird die Anwendung von Blockchain-Datenstrukturen 10 auf Simulationsmodelle 20 ermöglicht. Normalerwiese benötigen die Simulationsmodelle 20 viel Speicherplatz. Die Speicherung der Simulationsmodelle 20 auf der Blockchain-Datenstruktur 10 würde sehr viel Rechenleistung erfordern.

Zusätzlich weist das NFT 12 den Programmcode auf. Der Programmcode umfasst einfache if - then Anweisungen.

## Patentansprüche

1. Blockchain-Datenstruktur (10) für ein Simulationsmodell, wobei das Simulationsmodell (20) in einer zentralen Speichereinheit und getrennt von der Blockchain-Datenstruktur (10) gespeichert ist umfassend:
a. mindestens ein eindeutiges Identifizierungskennzeichen (12); wobei
b. das mindestens eine eindeutige Identifizierungskennzeichen eine Verknüpfung zu dem Simulationsmodell (20) aufweist; wobei
das eindeutige Identifizierungskennzeichen (12) einen Programmcode in Bezug auf das Simulationsmodell (20) aufweist, welcher mindestens eine Bedingung und mindestens eine Anweisung umfasst; wobei
die mindestens eine Bedingung eine Nutzung des Simulationsmodells (20) festlegt; wobei
der Programmcode ausgeführt wird, wenn die mindestens eine Bedingung erfüllt ist.

2. Blockchain-Datenstruktur (10) nach Anspruch 1, wobei das eindeutige Identifizierungskennzeichen (12) ein Token ist, bevorzugt ein non-fungible token, NFT.

3. Blockchain-Datenstruktur (10) nach Anspruch 1 oder Anspruch 2, wobei die zentrale Speichereinheit, in der das Simulationsmodell (20) gespeichert ist, ein Server ist.

4. Zentrale Speichereinheit aufweisend ein Simulationsmodell (20).

5. Zentrale Speichereinheit nach Anspruch 4, wobei die zentrale Speichereinheit, in der das Simulationsmodell (20) gespeichert ist, ein Server ist.

6. Technisches System umfassend eine Blockchain-Datenstruktur (10) nach einem der Ansprüche 1 bis 3 und eine zentrale Speichereinheit nach einem der Ansprüche 4 bis 5.
